# FASCICULE DE BREVET EUROPEEN

(11) **EP 4 294 068 B1**
(45) Date de publication et mention de la délivrance du brevet: **28.05.2025**
(21) Numéro de dépôt: 23179399.3
(22) Date de dépôt: 15.06.2023
(51) Int. Cl.: H04W 12/45, H04W 12/082, H04B 1/3816

(54) **DISPOSITIF COMPRENANT UNE INTERFACE DE MODULE D'IDENTITE D'ABONNE ET PROCEDE ASSOCIE**
VORRICHTUNG MIT EINER TEILNEHMERIDENTITÄTSMODULSCHNITTSTELLE UND VERFAHREN DAFÜR
DEVICE INCLUDING SUBSCRIBER IDENTITY MODULE INTERFACE AND METHOD

(30) Priorité: 16.06.2022 FR 2205869
(43) Date de publication de la demande: 20.12.2023
(73) Titulaire: Sagemcom Energy & Telecom SAS, 92270 Bois-Colombes (FR)
(72) Inventeur: LHUILLIER, Pierre, 92500 Rueil-Malmaison (FR); GINESTET, Patrick, 92500 Rueil-Malmaison (FR)
(74) Mandataire: Novagraaf Technologies

(56) Documents cités:
- CN-A- 108 416 928
- US-A1- 2013 260 830
- US-B2- 11 363 445

## Description

### Domaine technique

Il est décrit un dispositif comprenant une interface de module d'identité d'abonné configuré pour gérer plusieurs modules d'identité d'abonné, ainsi qu'un procédé correspondant. Le domaine technique comprend mais n'est pas limité à des dispositifs, tels que par exemple des compteurs, connectés à un réseau de communication.

### Arrière-plan technique

Il existe de nombreux dispositifs comprenant un module d'identification d'abonné (communément appelé module 'SIM' pour 'Subscriber Identity Module' en langue anglaise), ce type de module étant nécessaire aux dispositifs pour accéder à un réseau de communication. Dans certaines applications, un module de ce type est fixé, par exemple par soudage, sur un circuit imprimé d'un dispositif d'une façon qui le rend difficilement amovible. Lorsque le dispositif ne dispose que d'une seule interface pour un tel module, la mise en œuvre d'un second module est peu aisée - il faut par exemple dessouder le module initial et le remplacer par le second module. Une solution permettant une utilisation plus aisée d'un second module est souhaitable.

Les documents CN 108 416 928 A, US 2013/260830 A1 et US 11 363 445 B2 concernent le domaine technique de l'invention.

### Résumé

L'invention est définie par les revendications annexées.

Un ou plusieurs modes de réalisation concernent un dispositif comprenant :
∘ une interface pour module d'identification d'abonné;
∘ un premier module d'identification d'abonné connecté à ladite interface ;
∘ un connecteur adapté pour connecter un second module d'identification d'abonné à ladite interface lorsque le second module est présent dans le connecteur ;
∘ un détecteur de présence configuré pour générer un signal de présence du second module dans le connecteur ;
∘ un moyen d'inhibition du premier module en fonction du signal de présence,
   le dispositif étant configuré pour fonctionner avec le second module quand le premier module est inhibé,
   le moyen d'inhibition étant configuré pour inhiber un module par mise en état d'impédance haute d'une entrée/sortie de données dudit module, par
   application d'un signal correspondant à un état actif à une entrée de signal d'initialisation du module à inhiber.

Selon un mode de réalisation, le dispositif comporte
- un bus de données interconnectant une entrée/sortie de données de l'interface, l'entrée/sortie du premier module et une entrée/sortie du connecteur qui coopère fonctionnellement avec une entrée/sortie de données du second module lorsque le second module est présent dans le connecteur ;
- un bus de signal d'horloge interconnectant une sortie de signal d'horloge de l'interface, une entrée de signal d'horloge du premier module et une entrée du connecteur qui coopère fonctionnellement avec une entrée de signal d'horloge du second module lorsque le second module est présent dans le connecteur .

Selon un mode de réalisation, le moyen d'inhibition comprend un circuit commandé par le signal de présence pour automatiquement inhiber le premier module quand le second module est présent dans le connecteur, le dispositif fonctionnant alors avec le second module par l'intermédiaire de ladite interface.

Selon un mode de réalisation, le circuit est commandé par le signal de présence pour automatiquement désinhiber le premier module lorsque le second module est retiré du connecteur, le dispositif fonctionnant alors avec le premier module par l'intermédiaire de ladite interface.

Selon un mode de réalisation, une sortie de signal d'initialisation de l'interface est connectée à une première entrée du connecteur, le connecteur étant adapté pour connecter la première entrée à une entrée de signal d'initialisation du second module lorsque le second module est présent dans le connecteur ; une résistance est connectée entre l'entrée de signal d'initialisation du second module et la sortie de signal d'initialisation de l'interface, la résistance étant adaptée à permettre à ladite interface de
- commander une initialisation du second module lorsqu'il est présent dans le connecteur et que le premier module est inhibé ; et de
- commander une initialisation du premier module lorsque le second module n'est pas présent dans le connecteur et que le premier module n'est pas inhibé.

Selon un mode de réalisation, le moyen d'inhibition comprend un processeur recevant le signal de présence, le processeur étant configuré sélectivement inhiber, respectivement désinhiber l'un parmi le premier et le second module et désinhiber, respectivement inhiber l'autre parmi le premier et le second module, lorsque le second module est présent dans le connecteur, le dispositif étant configuré pour fonctionner avec le module désinhibé.

Selon un mode de réalisation, le processeur est configuré pour la mise en œuvre d'au moins l'un parmi :
un premier mode dans lequel le premier module est inhibé automatiquement en cas de présence du second module dans le connecteur et désinhibé automatiquement en cas de retrait du second module du connecteur ;
un second mode dans lequel, lorsque le second module est présent dans le connecteur, l'inhibition du premier module est réalisée suite à réception d'une confirmation de la part d'un utilisateur et la désinhibition est réalisée soit automatiquement en cas de retrait du second module du connecteur, soit sur réception d'une commande de la part d'un utilisateur.

Un ou plusieurs modes de réalisation concernent un procédé mis en œuvre par un dispositif comprenant une interface pour module d'identification d'abonné; un premier module d'identification d'abonné connecté à ladite interface ; un connecteur adapté pour connecter un second module d'identification d'abonné à ladite interface lorsque le second module est présent dans le connecteur ; un processeur et une mémoire comportant du code logiciel qui quand il est exécuté par le processeur, conduit le dispositif à mettre en œuvre le procédé, le procédé comprenant :
- la détection de la présence du second module dans le connecteur ;
- l'inhibition du premier module en fonction du signal de présence ; et
- lorsque le premier module est inhibé, le fonctionnement du dispositif avec le second module,
l'inhibition comprenant la mise en état d'impédance haute d'une entrée/sortie de données du module à inhiber, par application d'un signal correspondant à un état actif à une entrée de signal d'initialisation.

Selon un mode de réalisation, le procédé comprend l'inhibition, respectivement la désinhibition sélective d'un parmi le premier et le second module ;
la désinhibition, respectivement l'inhibition de l'autre parmi le premier et le second module; et
le fonctionnement avec le module désinhibé.

Un ou plusieurs modes de réalisation concernent un produit programme d'ordinateur comprenant des instructions qui, lorsque le programme est exécuté par un processeur d'un dispositif conduisent ce dispositif à mettre en œuvre le procédé décrit.

Un ou plusieurs modes de réalisation concernent un support d'enregistrement lisible par un dispositif muni d'un processeur, ledit support comprenant des instructions qui, lorsque le programme est exécuté par un processeur d'un dispositif conduisent ce dispositif à mettre en œuvre le procédé décrit.

### Brève description des figures

D'autres caractéristiques et avantages apparaitront au cours de la lecture de la description détaillée qui va suivre pour la compréhension de laquelle on se reportera aux dessins annexés parmi lesquels :
- la figure 1 est un diagramme bloc fonctionnel d'un dispositif selon un premier mode de réalisation non limitatif ;
- la figure 2 est un algorigramme d'un procédé de mise en œuvre du dispositif de la figure 1 selon un exemple de réalisation non-limitatif ;
- la figure 3 est un diagramme bloc fonctionnel d'un dispositif selon un second mode de réalisation non limitatif ;
- la figure 4 est un algorigramme d'un procédé de mise en œuvre du dispositif de la figure 3 selon un exemple de réalisation non-limitatif.

### Description détaillée

Dans la description qui va suivre, des éléments identiques, similaires ou analogues seront désignés par les mêmes chiffres de référence. Sauf indication contraire, les diagrammes ne sont pas nécessairement à l'échelle.

Les diagrammes blocs et algorigrammes dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque étape d'un algorigramme peut représenter un module ou encore une portion de code logiciel comprenant des instructions pour l'implémentation d'une ou plusieurs fonctions. Selon certaines implémentations, l'ordre des blocs ou des étapes peut être changé, ou encore les fonctions correspondantes peuvent être mises en œuvre en parallèle. Les blocs ou étapes de procédé peuvent être implémentés à l'aide de circuits, de logiciels ou d'une combinaison de circuits et de logiciels, et ce de façon centralisée, ou de façon distribuée, pour tout ou partie des blocs ou étapes. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou d'étapes, ou encore avec d'autres composants ou à travers d'autres étapes. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des étapes des procédés ou méthodes selon les exemples de réalisation. Le code logiciel peut être stocké dans une mémoire ou un support lisible accessible directement ou à travers un autre module par le processeur ou contrôleur.

Selon un ou plusieurs modes de réalisation, un dispositif comprend une interface de module d'identification d'abonné. Plusieurs modules d'identification d'abonnés sont reliés à cette interface. En fonctionnement, le dispositif est prévu pour inhiber tous sauf l'un de ces modules. L'interface permet alors de communiquer avec le module actif, c'est-à-dire le module non inhibé.

A titre purement illustratif, le dispositif est par exemple un dispositif qui requiert une connexion à un réseau de communication, tel qu'un réseau cellulaire. Un tel réseau peut exiger la mise en œuvre d'un module d'identification d'abonné pour l'accès aux services. Le dispositif est par exemple un compteur connecté pour l'électricité, l'eau, le gaz...

Selon un ou plusieurs modes de réalisation, une entrée/sortie de signal de données et une sortie de signal d'horloge de l'interface sont reliés aux modules et les signaux afférents sont envoyés à tous les modules. Le dispositif est configuré pour qu'une sortie de signal d'initialisation de l'interface puisse être forcée à un niveau de tension donné pour les modules à inhiber, ce niveau de tension impliquant que l'entrée/sortie du signal de données de ces modules est mis en état de haute impédance, ce qui correspond à une inhibition. Seul le module qui doit être actif n'est pas inhibé.

L'inhibition peut, selon certains modes de réalisation, être produite par un montage purement matériel, ou par la combinaison d'un montage matériel et d'un logiciel approprié.

Dans ce qui suit, le cas de deux modules d'identification d'abonné sera considéré. Selon un ou plusieurs modes de réalisation mettant en œuvre une gestion à l'aide d'un montage matériel, un premier module étant déjà connecté à l'interface, le second module étant rajouté ultérieurement, la détection de la présence du second module (par exemple un module inséré de façon amovible dans un connecteur relié à l'interface) va engendrer la production, par un montage matériel approprié, d'un signal au niveau de tension donné mentionné plus haut sur l'entrée de signal d'initialisation du premier module. Selon un ou plusieurs modes de réalisation mettant en œuvre une gestion combinée matérielle et logicielle, un composant (par exemple un microcontrôleur) va être commandé par un logiciel pour produire un signal approprié sur l'entrée de signal d'initialisation du module choisi pour être inhibé.

Dans certaines implémentations, un module peut avoir des fonctionnalités différentes ou supplémentaires par rapport à l'autre module.

L'utilisation du second module peut être nécessaire par exemple dans les cas d'usage suivants :
- Un test avec un simulateur de réseau ou un outillage de test, le second module étant alors une carte SIM dédiée à ce test.
- Une connexion à un réseau non accessible avec le premier module, par exemple dans le cadre de tests de validation ou de certification du dispositif et où le second module donne accès à ce réseau.
- Une expertise visant à déterminer la cause d'un mauvais fonctionnement (détermination s'il s'agit d'un problème de réseau ; d'un défaut du module d'identification d'abonné ou du composant contrôlant ce module...) sans devoir dessouder puis le cas échéant resouder le premier module.
- Un test comparatif du premier et du second module.
- Dans le cas où un dispositif est équipé de deux interfaces pour carte SIM, la seconde interface peut avoir des limitations de fonctionnalités, comparée à la première interface, l'avantage étant alors de pouvoir connecter le premier et le second module sur une même interface et de pouvoir tester les deux modules dans les mêmes conditions. Le logiciel embarqué du dispositif peut également ne prendre en compte qu'un seul module dans le cas d'une utilisation normale.

Le dispositif selon un ou plusieurs modes de réalisation permet d'éviter de devoir retirer le premier module pour le remplacer par le second module, ce qui pourrait exiger un dessoudage du premier module et un soudage du second module, ou encore un soudage d'un connecteur dans lequel le second module ou une carte portant le second module puisse être inséré. Le cas échéant, le premier module devrait être remis en place en fin de test. Ceci pourrait avoir pour conséquence une dégradation du premier module, d'autres composants du dispositif ou encore du circuit imprimé, suite à des manipulations répétées.

Selon un ou plusieurs modes de réalisation, la commutation entre modules peut se faire de manière automatique, par exemple par détection de la présence et/ou de l'absence du second module, ou alternativement nécessiter une ou plusieurs actions d'un utilisateur, par exemple une ou plusieurs actions d'activation ou de désactivation. Ces deux modes de réalisation seront décrits séparément.

Le premier module est par exemple typiquement un module SIM qui a vocation à être fixe dans le dispositif. Par 'fixe', on entend que le premier module n'a pas vocation à être retiré du dispositif dans un contexte de fonctionnement normal. Par exemple, le premier module est soudé sur un circuit imprimé du dispositif, ou encore à un support adapté dans le dispositif, lors de la fabrication de ce dernier. Cela peut éviter que le premier module soit retiré par inadvertance. Dans un autre contexte, le premier module peut être retiré du dispositif, mais cela n'est pas souhaitable pour certaines raisons. Par exemple, en cas de problèmes de fonctionnement du dispositif, le fait de retirer le premier module peut empêcher ou perturber des tests effectués pour déterminer la cause des problèmes.

Le premier module est par exemple de type 'eSIM', c'est-à-dire un composant discret pouvant être directement soudé sur un circuit imprimé ou sur un support adapté du dispositif, mais le premier module peut également être placé sur un support pour former une carte à microprocesseur, par exemple de type 'MiniSIM', 'MicroSIM' ou 'NanoSim' ou encore une carte à microprocesseur classique de la taille d'une carte de crédit, et être inséré sur un connecteur approprié du dispositif.

Le second module est par exemple placé sur un support pour former une carte à microprocesseur facilement manipulable, par exemple de type 'MiniSIM', 'MicroSIM' ou 'NanoSim' ou encore une carte à microprocesseur classique de la taille d'une carte de crédit.

Il n'est cependant pas exclu que le second module soit de type eSIM.

### Premier mode de réalisation

Selon le premier mode de réalisation, l'inhibition du premier module d'identification d'abonné est réalisée par l'intermédiaire d'un montage matériel approprié. Une gestion matérielle d'inhibition du premier module d'identification d'abonné, permet d'exclure, ou tout du moins limiter, les adaptations nécessaires au logiciel embarqué.

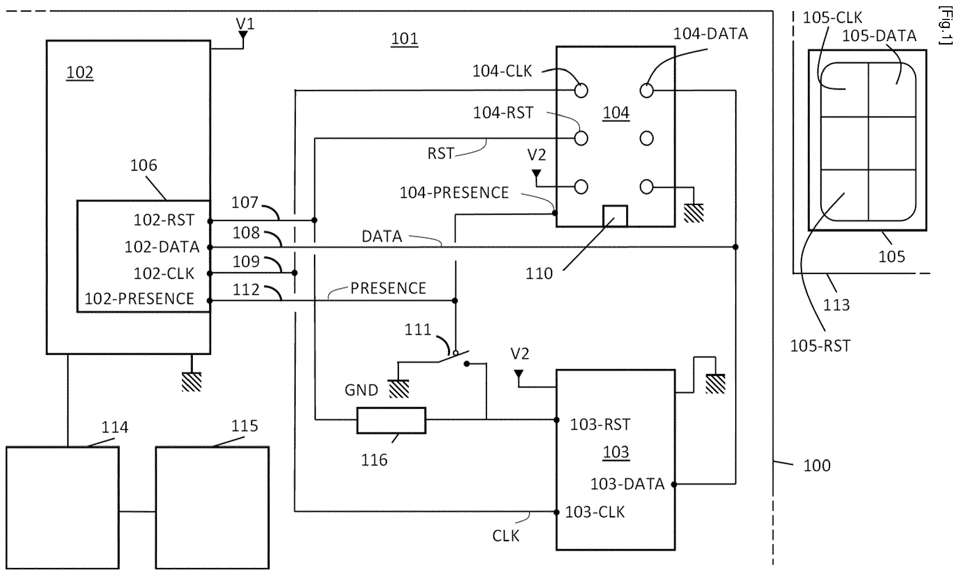

La figure 1 est un diagramme bloc fonctionnel d'un exemple de dispositif 100 selon un premier mode de réalisation. Le dispositif comprend une carte de circuit imprimé 101 comportant un composant 102, un premier module d'identification d'abonné 103 et un connecteur 104 adapté à la connexion d'un second module d'identification d'abonné 105.

Le composant 102 comprend une interface 106 pour module d'identification d'abonné munie de plusieurs entrées et/ou sorties pour communiquer avec d'une part le premier module 103 ou, lorsqu'il est connecté par l'intermédiaire du connecteur 104, le second module 105. Selon le présent exemple de réalisation, le composant 102 est un modem, mais un autre type de composant peut être utilisé pour contrôler les modules d'identification d'abonnés à travers une interface appropriée, selon l'application envisagée. Par exemple, le composant 102 peut être un microcontrôleur. Quand le composant 102 est un modem, ce dernier communique avec un module d'identification d'abonné pour pouvoir accéder aux services du réseau de communication auxquels l'abonnement donne accès.

Le dispositif est configuré pour que l'insertion du second module 105 dans le connecteur ait pour effet d'inhiber le premier module 103, permettant ainsi au composant 102 d'interagir avec le second module 105 à travers l'unique interface 106 pour module d'identification d'abonné du composant 102. Le second module 105 peut être placé sur un support 113 pour être plus aisément manipulable, le tout formant une carte à module d'identification d'abonné ou carte SIM.

L'interface 106 du composant comporte une entrée/sortie bidirectionnelle de données 102-DATA, une sortie de signal d'initialisation 102-RST et une sortie de signal d'horloge 102-CLK. Le premier module 103 comporte une entrée/sortie bidirectionnelle de données 103-DATA, une entrée de signal d'initialisation 103-RST et une entrée de signal d'horloge 103-CLK. Le connecteur 104 comporte une entrée/sortie 104-DATA, une entrée 104-RST et une entrée 104-CLK qui, lorsque le second module 105 est inséré dans le connecteur, sont connectés aux contacts correspondants du second module, respectivement 105-DATA, 105-RST et 105-CLK. Des lignes RST, DATA et CLK du circuit imprimé 101 et respectivement référencées 107, 108 et 109 connectent les entrées et/ou sorties respectives du composant 102, du premier module 103 et du connecteur 104. Une résistance 116 est insérée entre la sortie de signal d'initialisation 102-RST du composant 102 et l'entrée de signal d'initialisation 103-RST du premier module.

Optionnellement, le signal indicatif de la présence du second module généré par le connecteur 104 parvient au composant 102 à travers une ligne 112 connectée à une entrée 102-PRESENCE de l'interface 106 du composant 102.

Le connecteur 104 comprend de façon connue d'autres contacts nécessaires au fonctionnement d'un module inséré (tension d'alimentation, terre...) qui ne seront pas détaillées ici.

Le dispositif inhibe le premier module 103 lorsque le second module 105 est détecté dans le connecteur 104 à l'aide d'un montage approprié. Selon le mode de réalisation de la figure 1, en cas de détection du second module, l'inhibition comprend la mise dans un état de haute impédance du bus de données du premier module. Dans le cadre du présent exemple, le comportement d'un module en cas d'application d'un signal de niveau bas sur l'entrée de signal d'initialisation est que l'entrée/sortie de données de ce module est mise en impédance haute. Le processus d'initialisation d'un module est déclenché par un front montant sur l'entrée de signal d'initialisation - cependant, tant qu'un signal de niveau bas est maintenu sur l'entrée de signal d'initialisation, l'entrée/sortie de données du module demeure en impédance haute. Le premier module est ainsi inhibé, sans devoir être retiré - le premier module peut notamment rester connecté à la ligne du signal d'horloge et à la ligne de données.

Le connecteur 104 comporte un détecteur de présence de module 110 qui, quand le second module 105 est inséré dans le connecteur, génère un signal indicatif de la présence du second module dans le connecteur (sortie 104-PRESENCE). Selon le présent mode de réalisation, ce signal est bas quand un module est présent et haut dans le cas contraire. Le détecteur de présence peut prendre différentes formes, par exemple il peut comprendre de façon connue en soi un simple interrupteur de bout de course qui se ferme quand le second module est complètement inséré dans le connecteur.

A l'état actif (bas), le signal indicatif de la présence du second module dans le connecteur ferme un interrupteur 111. Dans l'état fermé, l'interrupteur 111 connecte une tension représentative d'un niveau bas (tension à 0V, terre) à l'entrée de signal d'initialisation 103-RST du premier module 103. Dans l'état ouvert, la sortie de l'interrupteur vers l'entrée d'initialisation 103-RST du premier module est en impédance haute.

Lorsque le second module n'est pas inséré dans le connecteur, l'interrupteur 111 est dans un état où le signal d'initialisation généré par le composant parvient au premier module à travers la résistance 116. Lorsque le second module est inséré, l'interrupteur 111 force l'entrée de signal d'initialisation 103-RST du premier module à zéro. Cependant, la présence de la résistance 116 empêche qu'un signal généré par le composant 102 au niveau de la sortie de signal d'initialisation 102-RST soit forcé à zéro. La résistance 116 est dimensionnée en conséquence - dans une implémentation particulière, elle est par exemple de 2,2 kOhms.

D'autres implémentations matérielles pour forcer l'entrée de signal d'initialisation du premier module à zéro quand ce premier module doit être inhibé peuvent bien entendu être envisagées par la personne du métier, sans la résistance 116. Par exemple, il est possible d'implémenter un commutateur double entrée sortie unique ayant comme première entrée une source de tension à la tension active de l'entrée de signal d'initialisation 103-RST du premier module et comme seconde entrée le signal 102-RST de l'interface du composant 102, et comme sortie l'entrée de signal d'initialisation 103-RST, le commutateur étant commandé par le signal de présence 104-PRESENCE du connecteur 104.

Le dispositif selon le mode de réalisation de la figure 1 comprend également un processeur 114 et une mémoire 115 comportant du code logiciel configuré pour permettre le fonctionnement du dispositif tel que décrit. La mémoire 115 comprend par exemple le code d'un logiciel applicatif exécuté par le processeur 114.

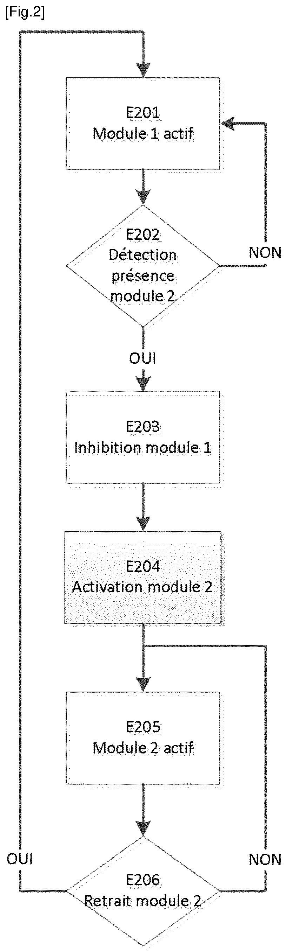

La figure 2 est un algorigramme qui détaille un exemple de fonctionnement du dispositif de la figure 1. Selon cet exemple, en E201, le dispositif 100 fonctionne avec le premier module, qui est actif. L'entrée du signal d'initialisation 103-RST n'est pas forcée dans son état actif par le montage commandé par le signal de présence du second module généré le cas échéant par le connecteur 104. En l'absence du second module, le premier module n'est pas inhibé. Le composant 102 contrôle le premier module à travers son interface 106. Cette situation perdure tant qu'aucun module n'est inséré dans le connecteur 104 (test E202 négatif). Lorsque la présence du second module est détectée (test E202 positif), le premier module est inhibé. En E203, l'entrée du signal d'initialisation 103-RST est alors forcée dans son état actif (signal bas dans le présent exemple) par le montage commandé par le signal de présence du second module, ayant pour conséquence la mise en haute impédance de l'entrée/sortie de données du premier module et par conséquent l'inhibition de ce premier module. Le second module est pleinement connecté au composant 102 par l'interface 106 et le composant 102 peut communiquer avec le second module et notamment l'activer (E204) en effectuant une initialisation. Le dispositif fonctionne alors avec le second module (E205). Cette situation perdure tant que le second module n'est pas retiré du connecteur 104 (test négatif en E206). Si le second module est retire (test positif en E206), alors le signal de présence change d'état et le premier module redevient actif (E201).

Selon le présent exemple de réalisation, le composant 102 n'exploite pas le signal de présence généré par le connecteur 104 dans la gestion des modules d'identification d'abonné. Le composant 102 peut optionnellement utiliser ce signal pour gérer un retrait / une réinsertion du premier module lorsque le dispositif est sous tension, dans le cas où le premier module est extractible.

Le composant met en œuvre un protocole qui lui permet de passer d'un module à l'autre.

Deux cas sont à considérer, en prenant l'exemple où le composant 102 est un modem :
(a) Le second module d'identification d'abonné a été inséré lorsque le dispositif était hors tension.
   a.1. A la mise sous tension, le premier module est inhibé d'office par la commande du commutateur 111 par le signal de présence du second module.
   a.2. Le logiciel applicatif effectue une initialisation du modem (le composant 102 selon le présent exemple).
   a.3. Une fois l'initialisation du modem effectuée, le logiciel applicatif interroge le modem pour connaitre l'état du module d'identification d'abonné connecté à l'interface du modem, en l'occurrence le second module. Le modem indique en retour si le module est opérationnel, s'il est bloqué, si un code PIN ou PUK est nécessaire, ou s'il n'y a pas de module d'identification d'abonné.
      ∘ Si le second module d'identification d'abonné est opérationnel, le modem peut, à l'aide des informations contenues dans le second module (identifiant de l'opérateur, du réseau, itinérance...) se connecter au réseau de communication identifié et fonctionner normalement.
      ∘ Si aucun module n'est détecté (par exemple si le second module est défectueux, ou encore si un circuit imprimé relié à un connecteur déporté de module déporté est inséré dans le connecteur 104, sans qu'un module n'ait été inséré dans le connecteur déporté), le logiciel applicatif relance l'initialisation du composant 102 jusqu'à détection d'un module (points a.2. et a.3. ci-dessus).
   a.4. Lorsque le fonctionnement avec second module n'est plus utile, le dispositif est mis hors tension, le second module est retiré et le cas échéant le dispositif est remis sous tension.
(b) Le second module d'identification d'abonné est inséré lorsque le dispositif est sous tension (insertion dite 'à chaud').
   Le logiciel applicatif aura alors préalablement déjà effectué la séquence d'initialisation du modem, qui est dans un mode de fonctionnement normal, à savoir qu'il est connecté ou non à un réseau sur base des informations contenues dans le premier module.
   b.1. Suite à l'insertion du second module, le premier module est inhibé d'office par la commande du commutateur 111 par le signal de présence du second module. b.2. Le modem (composant 102) détecte que la communication avec le premier module est perdue. Le modem se déconnecte alors du réseau auquel il était éventuellement précédemment connecté. Cette information est remontée au logiciel applicatif, lequel déclenche une réinitialisation du modem (ou tout du moins de son interface avec le module d'identification d'abonné).
   b.3. Une fois l'initialisation du modem effectuée, le logiciel applicatif interroge le modem pour connaitre l'état du module d'identification d'abonné connecté à l'interface du modem, en l'occurrence le second module. Le modem indique en retour si le module est opérationnel, s'il est bloqué, si un code PIN ou PUK est nécessaire, ou s'il n'y a pas de module d'identification d'abonné.
      ∘ Si le second module d'identification d'abonné est opérationnel, le modem peut, à l'aide des informations contenues dans le second module (identifiant de l'opérateur, du réseau, itinérance...) se connecter au réseau de communication identifié et fonctionner normalement.
      ∘ Si aucun module n'est détecté (par exemple si le second module est défectueux), le logiciel applicatif relance l'initialisation du composant 102 jusqu'à détection d'un module (points a.2. et a.3. ci-dessus).
   b.4. Si le second module est retiré alors que le dispositif est sous tension, le modem détecte que la communication avec le second module est perdue. Le modem se déconnecte alors du réseau auquel il était éventuellement précédemment connecté. Cette information est remontée au logiciel applicatif, lequel déclenche une réinitialisation du modem (ou tout du moins de son interface avec le module d'identification d'abonné), et le modem redémarre avec les informations contenues dans le premier module.

L'exemple d'implémentation décrit ci-dessus permet de gérer l'inhibition du premier module avec peu de composants. De plus, il est prévu que l'inhibition du premier module et le replacement, au niveau de l'interface du premier module par le second module soit de nature à induire au niveau du composant 102 et/ou d'un autre composant intervenant dans la gestion de module, un comportement conduisant à une initialisation du module devenant actif. Dans le cas d'une insertion ou d'un retrait lorsque le dispositif est sous tension, cette initialisation est déclenchée par exemple lorsque le composant 102 constate une perte de communication avec le premier module suite à l'insertion du second module, ou encore lorsque le composant 102 constate une perte de communication avec le second module suite à l'extraction de ce dernier.

### Second mode de réalisation

Selon le second mode de réalisation, l'inhibition du premier module d'identification d'abonné est réalisée par l'intermédiaire d'un montage matériel et d'une implémentation par logiciel.

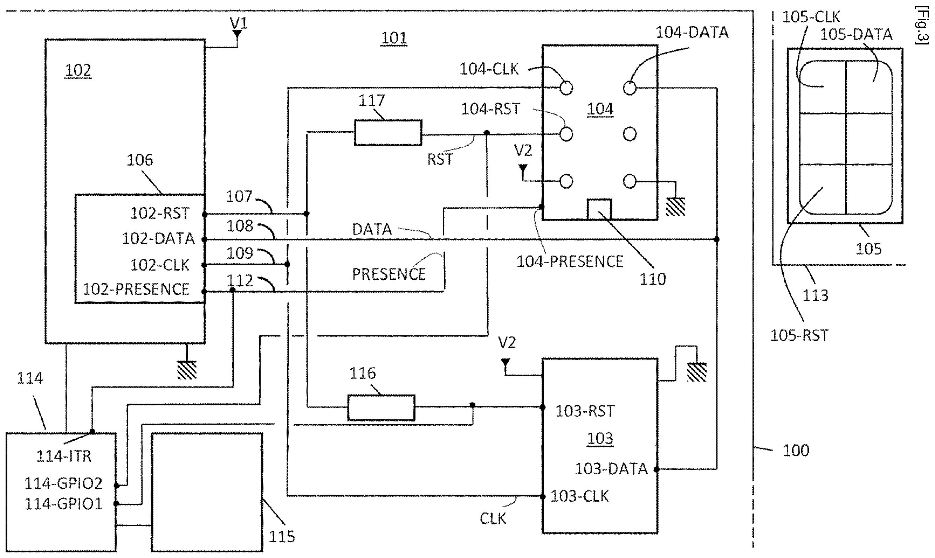

La figure 3 est un diagramme bloc fonctionnel d'un exemple de dispositif selon le second mode de réalisation. Le dispositif de la figure 3 reprend en grande partie les éléments du dispositif illustré par la figure 1, à part les éléments générant le signal d'inhibition à destination du premier module 103 sur base du signal indicatif de la présence du second module dans le connecteur. L'interrupteur 111, sa ligne de commande par le signal indicatif de la présence du second module et la ligne connectant la sortie de l'interrupteur à l'entrée 103-RST de signal d'initialisation du premier module ont été supprimés. A la place, l'entrée 103-RST de signal d'initialisation du premier module est reliée à une sortie 114-GPIO1 du processeur 114, tandis que l'entrée 104-RST du second module est reliée à une sortie 114-GPIO2 du premier module. Une résistance 117, semblable à la résistance 116 et ayant un rôle similaire, est placée entre la sortie du signal d'initialisation 102-RST du composant 102 et l'entrée 104-RST du composant 104. Une entrée de signal 114-ITR du processeur récupère le signal indicatif de la présence du second module et permet ainsi au processeur de savoir si le second module 105 est ou non inséré dans le connecteur 104.

Selon une variante de réalisation, des signaux de type GPIO pour la commande de l'initialisation des modules sont disponibles directement au niveau du composant 102, leur fonction étant contrôlée par le processeur 114.

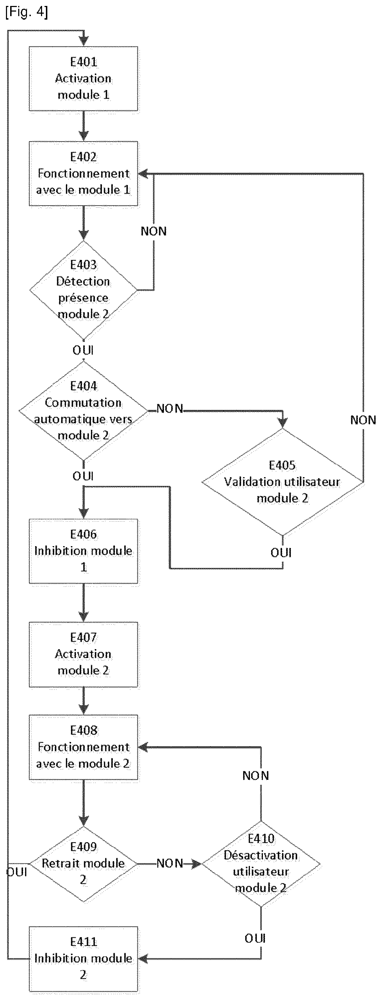

La figure 4 est un algorigramme qui détaille un exemple de fonctionnement du dispositif de la figure 3. Selon cet exemple, en E401, le dispositif 100 active le premier module. Le processeur 114 ne force pas l'entrée du signal d'initialisation du second module à zéro - le premier module est donc actif et le composant 102 contrôle tous les signaux du premier module, y compris pour la phase d'initialisation du premier module. Une fois cette phase terminée, en E402, le dispositif fonctionne normalement avec premier module. En E403, un test est effectué par le processeur 114 pour déterminer si le premier module 105 est présent.

Si le test est négatif, le dispositif continue de fonctionner avec le premier module (retour à E402). Si le test en E403 est positif et que le dispositif est en mode de commutation automatique vers le second module dès la détection de sa présence, un processus d'inhibition du premier module est enclenché en E406. Si le test en E403 est positif et que le dispositif n'est pas en mode de commutation automatique vers le second module, une confirmation de commutation est demandée à un utilisateur du dispositif en E405. Cette confirmation peut être obtenue de diverses manières, par exemple en affichant un choix oui/non dans une fenêtre affichée sur un écran relié à ou partie intégrante du dispositif 100.

Si la commutation n'est pas confirmée, le dispositif continue à fonctionner avec le premier module (retour à E402). Si la commutation est confirmée, le processus d'inhibition du premier module est enclenché en E406. En particulier, le processeur force l'entrée du signal d'initialisation du premier module à zéro en générant un signal adéquat sur la sortie 114-GPIO1. Le second module est alors activé en E407 - la sortie 114-GPIO2 est mise en impédance haute. Le composant 102 contrôle tous les signaux du second module, y compris pour la phase d'initialisation du second module. En E408, le second module est actif et le dispositif fonctionne normalement avec le second module. Si le processeur 114 détecte que le second module a été retiré (test positif en E409), le processeur réactive le premier module (retour à E401). Le choix peut également être proposé à un utilisateur d'inhiber le second module sans qu'il doive être retiré. En cas de réponse positive (choix positif en E410), le second module est inhibé (E411). En particulier, le processeur force l'entrée du signal d'initialisation 104-RST à zéro en générant une tension adéquate sur 114-GPIO2, puis repasse à l'activation du premier module (retour à E401). Si le second module n'est pas retiré et que l'utilisateur ne choisit pas une désactivation de ce module, le dispositif continue de fonctionner avec le second module (retour à E408).

Le dispositif de la figure 3 donne un contrôle à l'utilisateur concernant la commutation entre le premier module et le second module.

Par exemple, selon un mode de fonctionnement du dispositif, l'utilisateur peut choisir le moment de commutation du premier module vers le second module, qui n'est pas automatique lors de l'insertion du second module dans le connecteur. Selon un mode de fonctionnement du dispositif, l'utilisateur peut choisir de réactiver le premier module même lorsque le premier module est encore présent dans le connecteur. Le dispositif peut également être programmé pour fonctionner en mode automatique de commutation, si tel est le souhait. Selon d'autres exemples de réalisation non illustrés, il est possible de prévoir une commutation automatique quand le second module est inséré et/ou lorsqu'il est arraché.

Selon une variante de réalisation, le dispositif comporte plusieurs modules fixes et non un seul. L'insertion d'un module dans un connecteur du dispositif inhibe alors l'ensemble des modules fixes.

Divers avantages ont été décrits dans ce qui précède. Un mode de réalisation spécifique peut ne présenter qu'un ou plusieurs de ces avantages, mais pas forcément tous les avantages.

Le circuit d'inhibition peut comprendre un ou plusieurs composants électroniques et/ou un ou plusieurs processeurs ou contrôleurs exécutant du code logiciel adapté.

### SIGNES DE REFERENCE

100 - Dispositif
101 - Carte de circuit imprimé
102 - Composant à interface pour module d'identification d'abonné
102-RST - Sortie de signal d'initialisation
102-DATA - Entrée/sortie de données
102-CLK - Sortie de signal d'horloge
102-PRESENCE - entrée de signal de présence du second module
102-GPIO1 - sortie de signal d'inhibition
103 - Premier module
103-RST - Entrée de signal d'initialisation
103-DATA - Entrée/sortie de données
103-CLK - Entrée de signal d'horloge
104 - Connecteur pour second module
104-RST - Entrée de signal d'initialisation
104-DATA - Entrée/sortie de données
104-CLK - Entrée de signal d'horloge
105 - Second module
105-RST - Entrée de signal d'initialisation
105-DATA - Entrée/sortie de données
105-CLK - Entrée de signal d'horloge
106 - Interface pour module d'identification d'abonné
107 - Ligne / bus de signal d'initialisation
108 - Ligne / bus de données
109 - Ligne / bus de signal d'horloge
110 - Détecteur de présence de module
111 - Commutateur
112 - Ligne de signal de présence du second module
113 - Support
114 - Processeur
114-ITR - entrée de signal indicatif de présence
114-GPIO1 - sortie de signal d'inhibition du premier module
114-GPIO2 - sortie de signal d'inhibition du second module
115 - Mémoire
116 - Résistance
117 - Résistance

## Revendications

1. Dispositif (100) comprenant :
∘ une interface (106) pour module d'identification d'abonné (103, 105);
∘ un premier module d'identification d'abonné (103) connecté à ladite interface ;
∘ un connecteur (104) adapté pour connecter un second module d'identification d'abonné (105) à ladite interface lorsque le second module est présent dans le connecteur ;
∘ un détecteur de présence (110) configuré pour générer un signal de présence (104-PRESENCE) du second module dans le connecteur ;
un moyen d'inhibition (111, 114) du premier module en fonction du signal de présence, le dispositif étant configuré pour fonctionner avec le second module quand le premier module est inhibé,
∘ **caractérisé en ce que** le moyen d'inhibition est configuré pour inhiber un module par mise en état d'impédance haute d'une entrée/sortie de données (103-DATA, 105-DATA) dudit module, par application d'un signal correspondant à un état actif à une entrée de signal d'initialisation (103-RST, 105-RST) du module à inhiber.

2. Dispositif selon la revendication 1, comportant :
∘ un bus de données (108) interconnectant une entrée/sortie de données (102-DATA) de l'interface, l'entrée/sortie (103-DATA) du premier module et une entrée/sortie (104-DATA) du connecteur qui coopère fonctionnellement avec une entrée/sortie de données (105-DATA) du second module lorsque le second module est présent dans le connecteur ;
∘ un bus de signal d'horloge (109) interconnectant une sortie de signal d'horloge (102-CLK) de l'interface, une entrée de signal d'horloge (103-CLK) du premier module et une entrée (104-CLK) du connecteur qui coopère fonctionnellement avec une entrée de signal d'horloge (105-CLK) du second module lorsque le second module est présent dans le connecteur .

3. Dispositif selon l'une des revendications 1 à 2, dans lequel le moyen d'inhibition comprend un circuit (114) commandé par le signal de présence (104-PRESENCE) pour automatiquement inhiber (E203) le premier module quand le second module est présent dans le connecteur, le dispositif fonctionnant alors avec le second module par l'intermédiaire de ladite interface.

4. Dispositif selon la revendication 3, dans lequel le circuit est commandé par le signal de présence (104) pour automatiquement désinhiber le premier module lorsque le second module est retiré du connecteur, le dispositif fonctionnant alors avec le premier module par l'intermédiaire de ladite interface.

5. Dispositif selon l'une des revendications 3 ou 4, dans lequel :
- une sortie de signal d'initialisation de l'interface (102-RST) est connectée à une première entrée (104-RST) du connecteur (104), le connecteur étant adapté pour connecter la première entrée à une entrée de signal d'initialisation du second module (105-RST) lorsque le second module est présent dans le connecteur ;
- une résistance (116) est connectée entre l'entrée de signal d'initialisation du second module (103-RST) et la sortie de signal d'initialisation de l'interface (102-RST), la résistance étant adaptée à permettre à ladite interface de
∘ commander une initialisation du second module lorsqu'il est présent dans le connecteur et que le premier module est inhibé ; et de
∘ commander une initialisation du premier module lorsque le second module n'est pas présent dans le connecteur et que le premier module n'est pas inhibé.

6. Dispositif selon l'une des revendications 1 à 2, le moyen d'inhibition comprend un processeur (114) recevant le signal de présence (104-PRESENCE), le processeur étant configuré pour sélectivement inhiber, respectivement désinhiber l'un parmi le premier et le second module et désinhiber, respectivement inhiber l'autre parmi le premier et le second module, lorsque le second module est présent dans le connecteur, le dispositif étant configuré pour fonctionner avec le module désinhibé.

7. Dispositif selon la revendication 6, le processeur étant configuré pour la mise en œuvre d'au moins l'un parmi :
un premier mode dans lequel le premier module est inhibé automatiquement (E404) en cas de présence du second module dans le connecteur et désinhibé automatiquement en cas de retrait du second module du connecteur ;
un second mode dans lequel, lorsque le second module est présent dans le connecteur, l'inhibition du premier module est réalisée suite à réception d'une confirmation (E405) de la part d'un utilisateur et la désinhibition est réalisée soit automatiquement (E409) en cas de retrait du second module du connecteur, soit sur réception d'une commande de la part d'un utilisateur (E410).

8. Procédé mis en œuvre par un dispositif (100) comprenant une interface (106) pour module d'identification d'abonné (103, 105) ; un premier module d'identification d'abonné (103) connecté à ladite interface ; un connecteur (104) adapté pour connecter un second module d'identification d'abonné (105) à ladite interface lorsque le second module est présent dans le connecteur ; un processeur (114) et une mémoire comportant du code logiciel qui quand il est exécuté par le processeur, conduit le dispositif à mettre en œuvre le procédé, le procédé comprenant :
∘ la détection (E202) de la présence du second module dans le connecteur ;
∘ l'inhibition (E203) du premier module en fonction du signal de présence ; et
∘ lorsque le premier module est inhibé, le fonctionnement du dispositif avec le second module ;
∘ **caractérisé en ce que** l'inhibition comprend la mise en état d'impédance haute d'une entrée/sortie de données (103-DATA 105-DATA) du module à inhiber, par application d'un signal correspondant à un état actif à une entrée de signal d'initialisation (103-RST, 105-RST) du module à inhiber.

9. Procédé selon la revendication 8 comprenant
l'inhibition, respectivement la désinhibition sélective d'un parmi le premier et le second module ;
la désinhibition, respectivement l'inhibition de l'autre parmi le premier et le second module; et
le fonctionnement avec le module désinhibé.

10. Produit programme d'ordinateur comprenant des instructions qui, lorsque le programme est exécuté par un processeur d'un dispositif conduisent ce dispositif à mettre en œuvre le procédé selon l'une des revendications 8 ou 9.

11. Support d'enregistrement lisible par un dispositif muni d'un processeur, ledit support comprenant des instructions qui, lorsque le programme est exécuté par un processeur d'un dispositif conduisent ce dispositif à mettre en œuvre le procédé selon l'une des revendications 8 ou 9.

## Patentansprüche

1. Vorrichtung (100), umfassend:
∘ eine Schnittstelle (106) für ein Teilnehmeridentifikationsmodul (103, 105);
∘ ein erstes Teilnehmeridentifikationsmodul (103), das mit der Schnittstelle verbunden ist;
∘ einen Verbinder (104), der dazu ausgelegt ist, ein zweites Teilnehmeridentifikationsmodul (105) mit der Schnittstelle zu verbinden, wenn das zweite Modul im Verbinder vorhanden ist;
∘ einen Anwesenheitsdetektor (110), der dazu konfiguriert ist, ein Anwesenheitssignal (104-PRESENCE) des zweiten Moduls im Verbinder zu erzeugen; eine Sperreinrichtung (111, 114) des ersten Moduls in Abhängigkeit von dem Anwesenheitssignal, wobei die Vorrichtung so konfiguriert ist, dass sie mit dem zweiten Modul arbeitet, wenn das erste Modul gesperrt ist,
∘ **dadurch gekennzeichnet, dass** die Sperreinrichtung dazu konfiguriert ist, ein Modul zu sperren, indem sie einen Dateneingang/-ausgang (103-DATA, 105-DATA) des Moduls in einen hochohmigen Zustand versetzt, indem sie ein einem aktiven Zustand entsprechendes Signal an einen Initialisierungssignaleingang (103-RST, 105-RST) des zu sperrenden Moduls anlegt.

2. Vorrichtung nach Anspruch 1, umfassend:
∘ einen Datenbus (108), der einen Dateneingang/-ausgang (102-DATA) der Schnittstelle, den Eingang/Ausgang (103-DATA) des ersten Moduls und einen Eingang/Ausgang (104-DATA) des Verbinders, der funktional mit einem Dateneingang/-ausgang (105-DATA) des zweiten Moduls zusammenwirkt, wenn das zweite Modul im Verbinder vorhanden ist, miteinander verbindet;
∘ einen Taktsignalbus (109), der einen Taktsignalausgang (102-CLK) der Schnittstelle, einen Taktsignaleingang (103-CLK) des ersten Moduls und einen Eingang (104-CLK) des Verbinders, der funktional mit einem Taktsignaleingang (105-CLK) des zweiten Moduls zusammenwirkt, wenn das zweite Modul im Verbinder vorhanden ist, miteinander verbindet.

3. Vorrichtung nach einem der Ansprüche 1 bis 2, wobei die Sperreinrichtung eine durch das Anwesenheitssignal (104-PRESENCE) gesteuerte Schaltung (114) umfasst, die das erste Modul automatisch sperrt (E203), wenn das zweite Modul im Verbinder vorhanden ist, wobei die Vorrichtung dann mit dem zweiten Modul über die Schnittstelle arbeitet.

4. Vorrichtung nach Anspruch 3, wobei die Schaltung durch das Anwesenheitssignal (104) gesteuert wird, um das erste Modul automatisch freizugeben, wenn das zweite Modul vom Verbinder entfernt wird, wobei die Vorrichtung dann mit dem ersten Modul über die Schnittstelle arbeitet.

5. Vorrichtung nach einem der Ansprüche 3 oder 4, wobei:
- ein Initialisierungssignalausgang der Schnittstelle (102-RST) mit einem ersten Eingang (104-RST) des Verbinders (104) verbunden ist, wobei der Verbinder dazu ausgelegt ist, den ersten Eingang mit einem Initialisierungssignaleingang des zweiten Moduls (105-RST) zu verbinden, wenn das zweite Modul im Verbinder vorhanden ist;
- ein Widerstand (116) zwischen dem Initialisierungssignaleingang des zweiten Moduls (103-RST) und dem Initialisierungssignalausgang der Schnittstelle (102-RST) angeschlossen ist, wobei der Widerstand so ausgelegt ist, dass die Schnittstelle
∘ eine Initialisierung des zweiten Moduls anweisen kann, wenn es im Verbinder vorhanden ist und das erste Modul gesperrt ist; und
∘ eine Initialisierung des ersten Moduls anweisen kann, wenn das zweite Modul nicht im Verbinder vorhanden ist und das erste Modul nicht gesperrt ist.

6. Vorrichtung nach einem der Ansprüche 1 bis 2, wobei die Sperreinrichtung einen Prozessor (114) umfasst, der das Anwesenheitssignal (104-PRESENCE) empfängt, wobei der Prozessor so konfiguriert ist, dass er selektiv eines von dem ersten und dem zweiten Modul sperrt bzw. freigibt und das jeweils andere von dem ersten und dem zweiten Modul freigibt bzw. sperrt, wenn das zweite Modul im Verbinder vorhanden ist, wobei die Vorrichtung so konfiguriert ist, dass sie mit dem freigegebenen Modul arbeitet.

7. Vorrichtung nach Anspruch 6, wobei der Prozessor so konfiguriert ist, dass er mindestens eines der folgenden implementiert:
einen ersten Modus, in dem das erste Modul automatisch gesperrt (E404) wird, wenn das zweite Modul im Verbinder vorhanden ist, und automatisch freigegeben wird, wenn das zweite Modul aus dem Verbinder entfernt wird;
einen zweiten Modus, in dem bei Vorhandensein des zweiten Moduls im Verbinder die Sperrung des ersten Moduls nach Empfang einer Bestätigung (E405) durch einen Benutzer erfolgt und die Freigabe entweder automatisch (E409) bei Entfernen des zweiten Moduls aus dem Verbinder oder nach Empfang eines Befehls durch einen Benutzer (E410) erfolgt.

8. Verfahren, das von einer Vorrichtung (100) implementiert wird, umfassend eine Schnittstelle (106) für ein Teilnehmeridentifikationsmodul (103, 105); ein erstes Teilnehmeridentifikationsmodul (103), das mit der Schnittstelle verbunden ist; einen Verbinder (104), der dazu ausgelegt ist, ein zweites Teilnehmeridentifikationsmodul (105) mit der Schnittstelle zu verbinden, wenn das zweite Modul im Verbinder vorhanden ist; einen Prozessor (114) und einen Speicher, der Softwarecode enthält, der bei Ausführung durch den Prozessor die Vorrichtung veranlasst, das Verfahren zu implementieren, wobei das Verfahren umfasst:
∘ Erkennung (E202) des Vorhandenseins des zweiten Moduls im Verbinder;
∘ Sperrung (E203) des ersten Moduls in Abhängigkeit vom Anwesenheitssignal; und
∘ wenn das erste Modul gesperrt ist, den Betrieb der Vorrichtung mit dem zweiten Modul;
∘ **dadurch gekennzeichnet, dass** die Sperrung das Versetzen eines Dateneingangs/-ausgangs (103-DATA 105-DATA) des zu sperrenden Moduls in einen hochohmigen Zustand umfasst, indem ein einem aktiven Zustand entsprechendes Signal an einen Initialisierungssignaleingang (103-RST, 105-RST) des zu sperrenden Moduls angelegt wird.

9. Verfahren nach Anspruch 8, umfassend
die selektive Sperrung bzw. Freigabe eines des ersten und des zweiten Moduls;
die Freigabe bzw. Sperrung des jeweils anderen des ersten und des zweiten Moduls; und
den Betrieb mit dem freigegebenem Modul.

10. Computerprogrammprodukt mit Anweisungen, die, wenn das Programm von einem Prozessor einer Vorrichtung ausgeführt wird, diese Vorrichtung veranlassen, das Verfahren nach einem der Ansprüche 8 oder 9 zu implementieren.

11. Speichermedium, das von einer Vorrichtung mit einem Prozessor gelesen werden kann, wobei das Medium Anweisungen umfasst, die, wenn das Programm von einem Prozessor einer Vorrichtung ausgeführt wird, diese Vorrichtung dazu veranlassen, das Verfahren nach einem der Ansprüche 8 oder 9 zu implementieren.

## Claims

1. Device (100) comprising:
∘ an interface (106) for a subscriber identification module (103, 105);
∘ a first subscriber identification module (103) which is connected to said interface;
∘ a connector (104) suitable for connecting a second subscriber identification module (105) to said interface when the second module is present in the connector;
∘ a presence detector (110) configured to generate a presence signal (104-PRESENCE) for the second module in the connector; a means (111, 114) for inhibiting the first module based on the presence signal, the device being configured to operate with the second module when the first module is inhibited,
∘ **characterized in that** the inhibiting means is configured to inhibit a module by setting a data input/output (103-DATA, 105-DATA) of said module to a high impedance state, by applying a signal corresponding to an active state to an initialization signal input (103-RST, 105-RST) of the module to be inhibited.

2. Device according to claim 1, including:
∘ a data bus (108) interconnecting a data input/output (102-DATA) of the interface, the input/output (103-DATA) of the first module and an input/output (104-DATA) of the connector which functionally cooperates with a data input/output (105-DATA) of the second module when the second module is present in the connector;
∘ a clock signal bus (109) interconnecting a clock signal output (102-CLK) of the interface, a clock signal input (103-CLK) of the first module and an input (104-CLK) of the connector which functionally cooperates with a clock signal input (105-CLK) of the second module when the second module is present in the connector.

3. Device according to one of claims 1 to 2, wherein the inhibiting means comprises a circuit (114) controlled by the presence signal (104-PRESENCE) to automatically inhibit (E203) the first module when the second module is present in the connector, the device then operating with the second module via said interface.

4. Device according to claim 3, wherein the circuit is controlled by the presence signal (104) to automatically disinhibit the first module when the second module is removed from the connector, the device then operating with the first module via said interface.

5. Device according to one of claims 3 or 4, wherein:
- an initialization signal output (102-RST) of the interface is connected to a first input (104-RST) of the connector (104), the connector being suitable for connecting the first input to an initialization signal input (105-RST) of the second module when the second module is present in the connector;
- a resistor (116) is connected between the initialization signal input (103-RST) of the second module and the initialization signal output (102-RST) of the interface, the resistor being suitable for allowing said interface to
∘ control an initialization of the second module when it is present in the connector and the first module is inhibited; and
∘ control an initialization of the first module when the second module is not present in the connector and the first module is not inhibited.

6. Device according to one of claims 1 to 2, the inhibiting means comprises a processor (114) receiving the presence signal (104-PRESENCE), the processor being configured to selectively inhibit and disinhibit, respectively, one of the first and second modules, and to disinhibit and inhibit, respectively, the other one of the first and second modules, when the second module is present in the connector, the device being configured to operate with the disinhibited module.

7. Device according to claim 6, the processor being configured to perform at least one of:
a first mode in which the first module is automatically inhibited (E404) in the case where the second module is present in the connector and automatically disinhibited in the case where the second module is removed from the connector;
a second mode in which, when the second module is present in the connector, the first module is inhibited following receipt of a confirmation (E405) from a user and disinhibited either automatically (E409) in the case where the second module is removed from the connector, or on receipt of a command from a user (E410).

8. Method performed by a device (100) comprising an interface (106) for a subscriber identification module (103, 105); a first subscriber identification module (103) connected to said interface; a connector (104) suitable for connecting a second subscriber identification module (105) to said interface when the second module is present in the connector; a processor (114) and a memory including software code which, when it is executed by the processor, brings the device to perform the method, the method comprising:
∘ detecting (E202) the presence of the second module in the connector;
∘ inhibiting (E203) the first module based on the presence signal; and
∘ when the first module is inhibited, operating the device with the second module;
∘ **characterized in that** the inhibition comprises setting a data input/output (103-DATA, 105-DATA) of the module to be inhibited to a high impedance state, by applying a signal corresponding to an active state to an initialization signal input (103-RST, 105-RST) of the module to be inhibited.

9. Method according to claim 8, comprising
selectively inhibiting and disinhibiting, respectively, one of the first and second modules;
disinhibiting and inhibiting, respectively, the other one of the first and second modules; and
operating with the disinhibited module.

10. Computer program product comprising instructions which, when the program is executed by a processor of a device, bring this device to perform the method according to one of claims 8 or 9.

11. Storage medium readable by a device provided with a processor, said medium comprising instructions which, when the program is executed by a processor of a device, bring this device to perform the method according to one of claims 8 or 9.
